# EUROPEAN PATENT APPLICATION

(11) **EP 0 993 986 A2**
(43) Date of publication of application: **19.04.2000**
(21) Application number: 99830583.3
(22) Date of filing: 14.09.1999
(51) Int. Cl.: B60P 1/64, B60P 1/48

(54) **Equipment for dumper or tipping trucks**

(30) Priority: 15.10.1998 IT BS980072
(71) Applicant: A.T.I.B. S.r.l., 25020 Dello (Brescia) (IT)
(72) Inventor: Nizioli, Roberto, c/o A.T.I.B. S.r.l., 25020 Dello (Brescia) (IT)
(74) Representative: Manzoni, Alessandro

(57) **Abstract**

This invention concerns the equipment for trucks with a skip, compactor or similar to be loaded-unloaded and tipped for emptying. It has a lifting arm (16) composed of two parallel and separate beams (16') and two cylinders (23) for commanding the rotation of said arm connected to, and located below and on the same plane as, said beams. The cylinders remain within the body of said beams when the arm is in the horizontal position. The equipment is particularly applicable to a truck or vehicle with an engine outside and behind the driver's cab, the beams (16') constituting the lifting arm being positioned to either side of the engine.

## Description

In general, this invention concerns the sector of industrial vehicles with a skip or compactor to be loaded-unloaded and tipped over and, more specifically, the equipment for loading-unloading and tipping of the said skips.

Trucks are already in use for the various kinds of transportation of these so-called loadable-unloadable skips. Correspondingly, various types of equipment have been proposed for mounting on the chassis of such trucks, enabling the skip to be grasped on the ground, lifted aboard and held on the truck for transportation, to be tipped over for emptying and replaced on the ground, as necessary.

This equipment is usually applied to the chassis of a truck by means of a counter-frame and consists of a lifting arm, capable of rotating around an axis orientated transversely to the vehicle and carrying at the free end, in front, a traverse lever with a hook for picking up the skip to be moved. In most cases, the lifting arm consists of a single beam which extends centrally along the longitudinal axis of the vehicle, parallel to the members of the counter-frame. Furthermore, the lifting arm is commanded in its rotation by hydraulic or pneumatic cylinders, placed between the arm itself and the members of the counter-frame.

The use of this kind of loading-unloading equipment, however, becomes problematic on vehicles which have the engine outside the driver's cab, projecting upwards from the rear of the chassis.

Therefore, in order to prevent the central lifting arm and the relative command cylinders from interfering with the engine, the equipment should be placed so as to extend over and above the engine. This would mean increasing the height to which the skip must be lifted and, in short, both the overall height and the vehicle's centre of gravity.

In addition, in the equipment already in use, the hook for passing through the eye of the skip always remains open, having no means of closure to prevent it from accidentally unhooking.

One of the main aims of this invention is to resolve such a problem, using loading-unloading equipment for skips on industrial vehicles which has been structurally perfected, in order to simplify its application even on vehicles with the engine outside the driver's cab and, furthermore, without affecting the loading height for the skip or the overall height of the vehicle itself.

This objective is reached by use of equipment where the lifting arm is formed by two parallel and separate beams. When the arm is at rest in a horizontal position, these beams lie to either side of the engine, between the latter and the members of the counter-frame which bears the equipment.

Another advantage is that the pneumatic or hydraulic cylinders that command the rotation of said arm are positioned on the same plane as the beams of the lifting arm and/or on the inside of the beams themselves, without creating any further impediment. In effect, when the lifting arm is in a horizontal position, the command cylinders remain incorporated within the body of the arm beams to which they are connected, thereby resolving the problem of their housing, like that of the beams, between the engine and the members of the counter-frame.

Another aim of this invention is to propose equipment for loading-unloading of the skip and its tipping for emptying, as mentioned above, which means rotating the lifting arm in two different angular positions above the counter-frame.

This other objective is reached by furnishing the equipment with double-shafted command cylinders, purposely to define the two operating angles of the arm, without resorting to a double chassis and flipping over all the equipment, as happens with the present technique.

It is also worth noting that in the current equipment the hook for passing through the eye of the skip remains open at all times, having no safety device against uncontrolled or accidental uncoupling.

For this reason, another scope of this invention is to propose a piece of equipment that has a pick-up hook with an automatic opening and closing device, to guarantee the safe coupling of the hook with the eye of the skip, even in difficult operating conditions where the location of the skip might cause it to come unhooked.

This objective is achieved by equipping the hook with a catch, to be moved in a straight line or at right angles, commanded by an actuator for the opening and closing of the hook, in response to a signal depending on the position of the skip or, rather, the angle of inclination of the lifting arm.

The enclosed drawings, although only indicative and not binding, illustrate a practical example of the equipment, according to the invention, where:
Fig. 1 shows a side view of a vehicle, complete with equipment, and not in use;
Figs 2 and 3 show the views from above and in cross section of the equipment in Fig. 1;
Fig. 4 shows a side view of the equipment in various phases of loading and unloading the skip;
Fig. 5 shows a similar view of the equipment during the tipping phase of the skip; and
Fig. 6 shows the view of the hook, complete with its latch for opening and closing.

These drawings show equipment 10 for loading-unloading and tipping of a skip 11, compactor or similar on a vehicle 12, having an engine 13 situated outside the driver's cab and behind it. The equipment 10 is mounted on a counter-frame 14 which is fixed on the chassis 15 of the vehicle 12. This includes a lifting arm 16 with a rear end hinged, in 17, to a rod 18, in turn hinged, in 19, to the back of the counter-frame 14. At the front end of the arm 16, there is hinged, in 20, a lever 21, carrying a clasping hook 22 at its free end, for hooking through the eye at the front of the skip, compactor or similar that is to be loaded, unloaded or tipped.

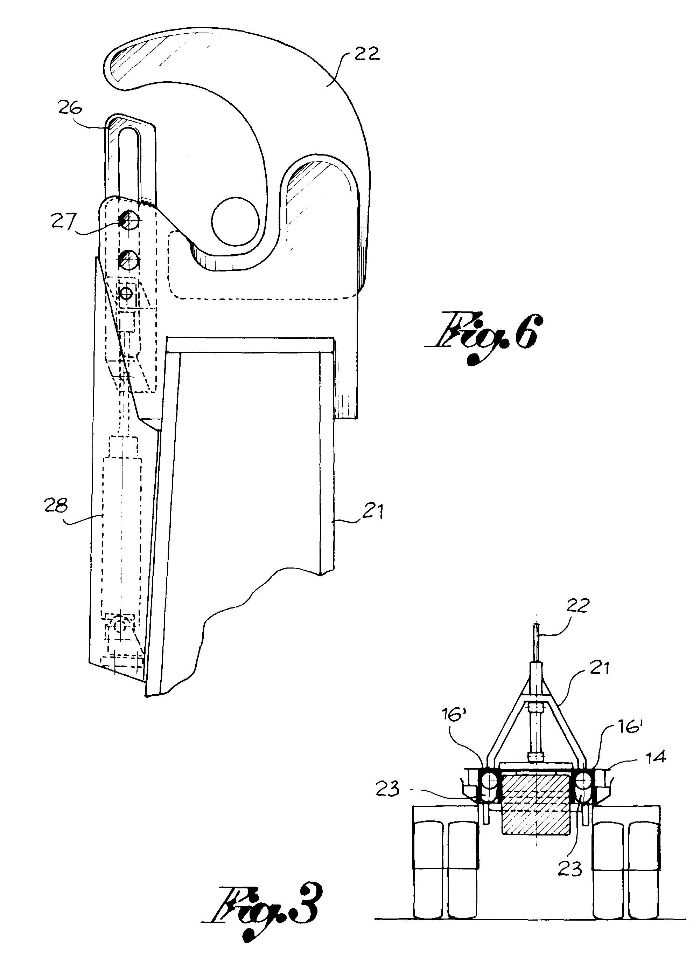

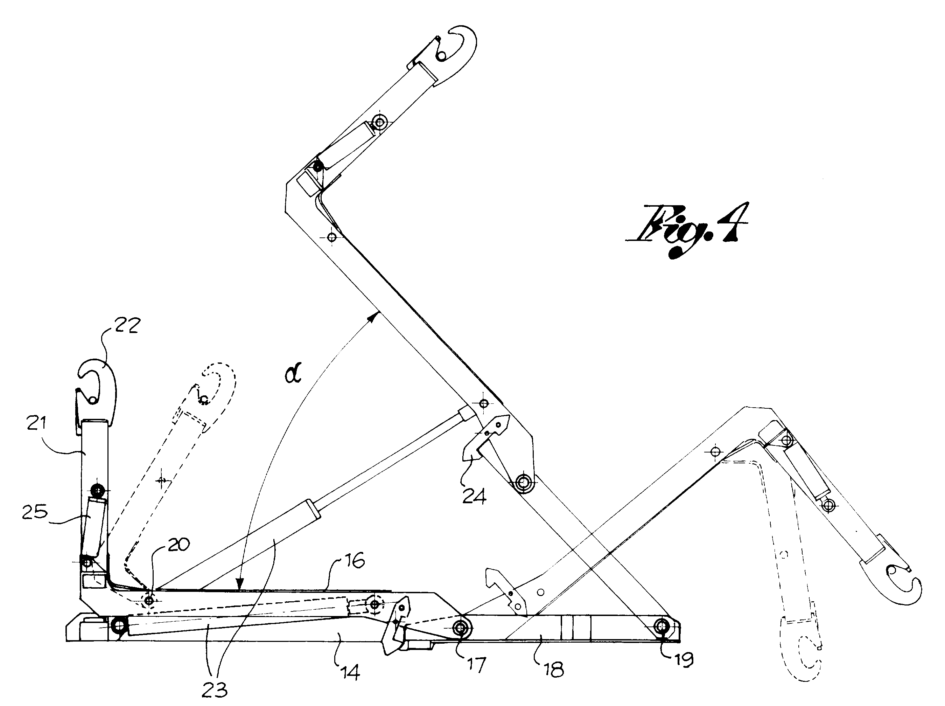

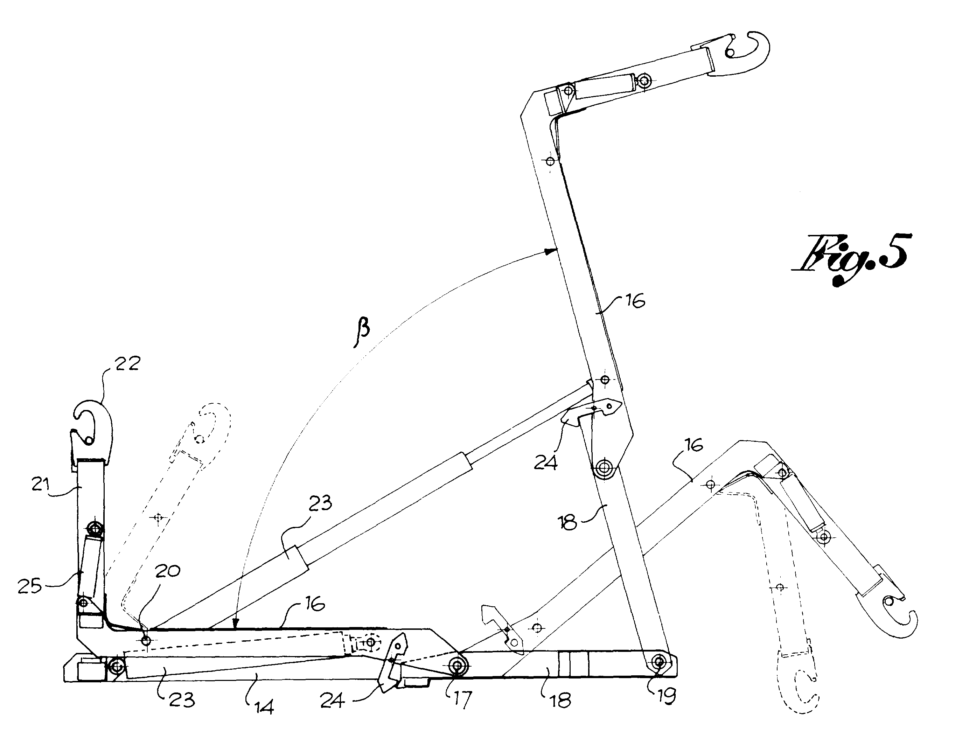

The lifting arm 16 is commanded by a couple of cylinders 23, pneumatic or hydraulic, for its rotation between a horizontal position and an angular position above the vehicle, together with the rod or separately from it. When the arm and rod rotate together, the rotation takes place around the rear axis 19 of the rod; when the arm rotates separately from the rod, the rotation takes place around the hinged axis of the arm itself with the rod, which has remained fixed (Figs 4 and 5).

Between the arm and the rod there are anchoring elements 24, which are already well-known, and which are used to block both components when they have to rotate together and to unblock them when the arm has to rotate separately from the rod, which stays firmly in place.

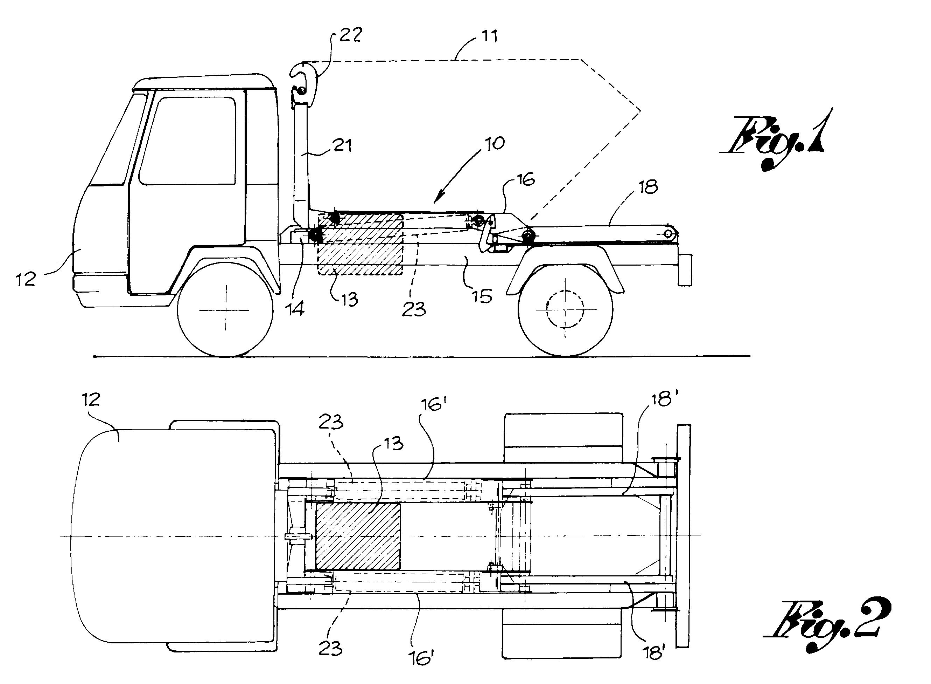

In greater detail, the lifting arm 16 is composed of two parallel beams 16', joined crossways, which pass down along either side of the vehicle's engine 13 when the arm is in a horizontal position (Figs 2 and 3).

Likewise, the rod 18 is formed by two parallel elements 18', which form the respective continuations of the two beams 16' that make the arm 16.

The hook lever 21 has a triangular shape, starting from the beams 16' of the arm 16 and tapering upwards towards the clasping hook 22. Said lever 21 can move sideways with respect to the arm 16, around the axis 20, with movements commanded by a cylinder 25 that may be pneumatic or hydraulic.

The two command cylinders 23 of the lifting arm 16 are also positioned on either side of the engine 13, connected to the beams 16' that form the arm 16 and, more specifically, they are located below and on the same plane as the said beams. Thus, when the arm is in a horizontal position, the cylinders 23 are under and within the body of the beams 16', without causing impediment to either the engine or the counter-frame 14.

Furthermore, said cylinders 23 may be double-shafted or with double deployment, in such a way as to rotate the arm at two different angles α and β, as shown in Figs 4 and 5. In this way, the same equipment can be used for loading-unloading the skip and for emptying it without unloading it from the truck.

The hook 22 is furnished with a catch 26 for the automatic opening and closing of the mouth of the hook itself.

In the version illustrated in Fig. 6, the catch is of the straight-opening variety. It is constrained lengthwise by several guiding devices 27 on the hook and connected to an actuator 28, consisting, for example, of a pneumatic or hydraulic cylinder, by means of which the catch can be moved from the retracted open position to the advanced closed position of the hook. This movement is in response to a sensor - not represented - which is co-ordinated with the equipment and which intervenes when the arm reaches a preestablished angle in the course of its movements. This angle can be memorised according to needs.

The use and operation of the equipment are self-evident: by means of the appropriate command for the arm 16, with or without rod 18, and for the hook lever 21, it is possible to pick up, load, unload or tip up for emptying a skip, compactor or similar, above all, in complete safety thanks to the automatic catch for opening and closing the hook, according to the inclination of the lifting arm, or on the basis of the skip or similar.

## Claims

1. Equipment for trucks with a skip, compactor or similar for loading-unloading and tipping for emptying; this equipment comprising:
- a counter-frame (14) to be fixed to the chassis of the vehicle;
- a rod (18) hinged to the rear part of said counter-frame;
- a lifting arm (16) hinged to the free end of the rod and capable of rotation from a horizontal position to, at least, one angled position above said counter-frame, together with or separately from said rod;
- a traverse lever (21) hinged to the free end of said lifting arm (16) and capable of moving at an angle to it;
- a clasping hook (22) at the free end of said hook lever;
- two pneumatic or hydraulic cylinders (23) for commanding the rotation of the lifting arm between the horizontal and angular positions;
- a pneumatic or hydraulic cylinder (25) for commanding the movement of the traverse lever; and characterised by the fact that said lifting arm (16) is composed of two parallel and separate beams (16') and that the two cylinders (23) for commanding the rotation of said arm are connected to, as well as located beneath and on the same plane as, said beams, said cylinders remaining within the body of said beams when the arm is in a horizontal position.

2. Equipment according to claim 1, further characterised by the fact that the rod (18) consists of two parallel elements (18') which are the respective continuations of the beams (16" forming the lifting arm (16), and the traverse lever (21) has a triangular shape, beginning with said beams and tapering upwards to the level of the clasping hook.

3. Equipment according to claims 1 and 2, characterised by the fact that said cylinders (23) for commanding the lifting arm have two deployments, in order to rotate said arm according to two different angles above the vehicle.

4. Equipment according to claim 1 and either of claims 2 and 3, particularly applicable to a truck or vehicle with the engine outside and behind the driver's cab, the beams (16') constituting the lifting arm being accommodated to either side of the engine and the command cylinders of said arm being contained within the body of said beams when the arm is in a horizontal position.

5. Equipment according to claim 1 or any of the claims 1-4, characterised by the fact that the clasping hook (22) is equipped with a catch (26) for the automatic opening and closing of the mouth of the hook itself, in response to a signal coming from a sensor that functions according to the angle of the arm above the vehicle, and adjustable according to necessity.

6. Equipment according to claim 5, characterised by the fact that said catch has a linear or angular movement, commanded by an actuator, which can select between a retracted open position or an advanced closed position for the hook.

7. Equipment for trucks with a skip, compactor or similar to be loaded-unloaded and tipped for emptying; this equipment including:
- a counter-frame (14) to be fixed onto the chassis of the vehicle;
- a rod (18) hinged to the rear part of said counter-frame;
- a lifting arm (16) hinged to the free end of the rod and capable of rotating between a horizontal position and at least one angular position above said counter-frame, together with, or separately from, said rod;
- a traverse lever (21) hinged to the free end of said lifting arm (16) and capable of moving at an angle to it;
- a clasping hook (22) at the free end of said traverse lever;
- two pneumatic or hydraulic cylinders (23) for commanding the rotation of the lifting arm between the horizontal and angular positions;
- a pneumatic or hydraulic cylinder (25) for commanding the movements of the traverse lever, and characterised by the fact that said lifting arm (16) is composed of two parallel and separate beams (16') and that the two cylinders (23) for commanding the rotation of said arm are connected to, and located beneath and on the same plane as, said beams, said cylinders remaining within the body of said beams when the arm is in the horizontal position, and by the fact that the clasping hook (22) is equipped with a catch (26) for the automatic opening and closing of the mouth of the hook itself, in response to a signal coming from a sensor that responds to the angle of the arm above the vehicle, and adjustable according to necessity.
